# EUROPÄISCHE PATENTANMELDUNG

(11) **EP 0 610 773 A2**
(43) Veröffentlichungstag der Anmeldung: **17.08.1994**
(21) Anmeldenummer: 94101436.7
(22) Anmeldetag: 01.02.1994
(51) Int. Cl.: G11B 23/087

(54) **Kassette, insbesondere Magnetbandkassette, mit einem Gehäuse**

(30) Priorität: 06.02.1993 DE 9301652 U
(71) Anmelder: BASF Magnetics GmbH, D-68165 Mannheim (DE)
(72) Erfinder: Schoettle, Klaus, F-67100 Strasbourg (FR); Schuett, Walter, D-77694 Kehl (DE); Klammer, Wolfgang, 77799 Ortenberg (DE)
(74) Vertreter: Karau, Wolfgang, Dr.

(57) **Zusammenfassung**

Eine Kassette besteht aus im wesentlichen flachen Gehäuseteilen und Front-, Rück- und Seitenwänden sowie einem Verschlußorgan für die Öffnungen der Frontseite, wobei die Frontseite teilweise mittels eines am Gehäuse befestigbaren Frontteils vervollständigbar ist. Frontteil und Verschlußorgan sind dabei mit ihnen zugeordneten Dickenmaßen aus spritzbarem Kunststoff hergestellt. Das Frontteil ist mit Reinigungselementen versehen.

Verwendbar ist die Kassette immer dann, wenn dünne Wanddicken erforderlich sind und ein Verschlußorgan vorhanden ist.

## Beschreibung

Die Erfindung betrifft eine Kassette, insbesondere Magnetbandkassette, mit einem Gehäuse aus Boden- und Deckelteilen, gebildet aus Boden- und Deckelwänden und Rückwand, Vorderwand und Seitenwänden, wobei die Vorderwand wenigstens eine mit einem Verschlußteil verschließbare Kopfeintrittsöffnung aufweist, sowie das Frontteil und das Verschlußteil.

Eine solche Kassette ist aus der EP-A-406 943 bekannt. Das darin beschriebene und dargestellte Verschlußteil ist einstückig aus dünnem, rostfreien Stahl hergestellt. Seine Form wird in der Praxis durch Stanzen oder Drahterosion und Biegen ausgebildet.

Das Kassettengehäuse wird üblicherweise aus einem thermoplastischen Kunststoff im Spritzgußverfahren hergestellt, wobei durch sehr dünne Teilstücke der Front- und Bodenwand die Wahl des Kunststoffmaterials und der Spritzverfahrensparameter sehr eingeschränkt ist, da sonst zu starke innere Spannungen und Verzugserscheinungen, insbesondere nach Temperaturbelastungen, auftreten. Das Kassettengehäuse besitzt wenigstens eine Führungsnut zum geführten Verschieben des Verschlußteils. Letzteres weist zum selben Zweck zum Eingreifen in die Nut bestimmte Abkantungen und/oder Fortsätze auf.

Das Verschlußteil wird üblicherweise nach dem Zusammenfügen von Gehäuseober- und -unterteil über das Gehäuse geschoben, wobei aufgrund der scharfkantigen Abkantungen und Fortsätze sowohl Montagestörungen als auch Gehäuse- und Verschlußteilbeschädigungen auftreten können.

Darüber hinaus ist das Verschlußteil wegen seines teuren Materials und der aufwendigen Herstellung äußerst kostenträchtig.

Mit der US-A-4 633 354 ist ein trennbares Rahmenteil für die Frontseite einer Kompakt-Kassette beschrieben, das am Kassettengehäuse lösbar über Klemmelemente befestigt ist. Dieses Rahmenteil enthält die genormten Kopf- und Führungselement-Öffnungen und ist von Hand entfernbar, wenn das Band für eine Aufzeichnung/Wiedergabe höherer Dichte aus der Kassette herausziehbar sein soll.

Die vorliegende Erfindung will derartige Nachteile bei Kassetten mit Verschlußteil von vornherein vermeiden.

Die gestellte Aufgabe wird mit einer Kassette, insbesondere Magnetbandkassette, mit einem Gehäuse aus Boden- und Deckelteilen, gebildet aus Boden- und Deckelwänden und Rückwand, Vorderwand und Seitenwänden, wobei die Vorderwand wenigstens eine mit einem Verschlußteil verschließbare Kopfeintrittsöffnung aufweist, erfindungsgemäß gelöst, wenn ein die Vorderwand im Bereich der Kopfeintrittsöffnung bildendes, an sich bekanntes, separates, am Gehäuse befestigbares Frontteil vorgesehen ist und wenn Verschlußteil und Frontteil aus spritzbarem Kunststoff-Material bestehen.

Dadurch lassen sich im Vorderwandbereich sehr dünne Wandteile ausbilden, ohne daß das übrige Gehäuse, wie oben ausgeführt, nachteilig beeinflußt würde. Außerdem lassen sich die Nachteile eines Metall-Verschlußteils vermeiden.

Wenn eine Kassette nach der Erfindung für ein durch IEC-Standard 94-7/1985 genormtes Kompakt-Kassettensystem einsetzbar sein soll, müssen die festgelegten Gehäusewandstärken des IEC-Standards auch bei dieser Kassette erfüllt werden. Das heißt aber, daß für die Dicken (Wandstärken) des Frontteils und des Verschlußteils Maximalwerte eingehalten werden müssen, die spritzgußtechnisch schwierig zu realisieren sind. Dafür ist es günstig, wenn die Dicke des Frontteils im Vergleich zur größten Dicke der Vorderwand um ein Mehrfaches kleiner ist.

Dieser Mehrfach-Faktor soll zwischen 2,2 und 3,5 liegen, so daß die Dicke des Frontteils extrem dünn ist und an der unteren Grenze der Spritzgußmöglichkeiten liegt. Der dadurch zwangsläufig erhaltene Verlust an Festigkeit kann deshalb hingenommen werden, da das Frontteil meistenteils durch das Verschlußteil abgedeckt und geschützt wird und nur bei Betrieb auf dem Gerät von diesem frei zugänglich ist.

Da beim Kompakt-Kassetten-System die Kassette ohne Verschlußteil konstruiert ist, müssen bei einer Kassette mit Verschlußteil die Maße desselben berücksichtigt werden.

Diese Forderung wird erfüllt, wenn die Summe der Dicken des Verschlußteils und des Frontteils eine vorgegebene Dicke insbesondere von etwa 1 mm entspricht.

Praktisch ist das erfüllbar, wenn das Verschlußteil eine Dicke von etwa 0,4 bis etwa 0,65 mm und das Frontteil eine Dicke von etwa 0,35 bis etwa 0,5 mm besitzt.

Damit wird auch eine ausreichende Festigkeit des Verschlußteils erzielt bei gerade noch maßgenau spritzbaren Wandstärken. Es ist auch zweckmäßig, daß das Frontteil einen Ergänzungsteil für die Wand des Bodenteils aufweist, besonders wenn auch die Dicke der Bodenwand im Bereich der Kopfeintrittsöffnung genormt ist, was in obigem IEC-Standard der Fall ist.

Falls eine Kassette hinter ihrer Kopfeintrittsöffnung eine Bandandruck-Einrichtung enthält, ist es erfindungsgemäß günstig, daß das Frontteil die Bandandruck-Einrichtung untergreift.

Die Befestigung des Frontteils erfolgt erfindungsgemäß mittels Befestigungselementen desselben, die zumindest überwiegend mit den Wänden der Boden- und Deckelteile der Kassette zusammenwirken.

Praktisch können diese Frontteilbefestigungselemente aus steg- oder hakenförmigen Vorsprüngen bestehen und die Wände der Boden- und Deckelteile entsprechend geformte Befestigungsnuten aufweisen. Nach Montage des Frontteils am Gehäuse durch In-Eingriffkommen der Stege und Nuten ist das Frontteil auch sicher in seiner Sollage. Die Befestigungsmittel müssen so fest und sicher ineinandergreifen, daß durch oder nach Montage des Verschlußteils und Verschieben desselben weder ein Außer-Eingriff-kommen vom, noch ein Verschieben zum oder Lösen des Frontteils vom Kassettengehäuse erfolgen kann.

Das Kunststoff-Material für das Frontteil und/oder das Verschlußteil ist vorteilhaft eines aus der Gruppe Polyacetal, FEP Fluorkunststoffe (Poly-Fluoräthylenpropylen) oder Polyamid, da sich diese besonders für das Spritzen derartig dünner Wandstärken eignen. Für das Gehäuse sind dann zweckmäßig Polystyrol oder Polypropylen als spritzbare Kunststoffe verwendbar.

Durch die separate Herstellbarkeit des Frontteils mit den besonders dünnen Wandstärken lassen sich die Spritzbedingungen für das übrige Kassettengehäuse in optimaler Weise einstellen, so daß es möglich wird, mit den genannten billigeren Kunststoffmaterialien verzugsfreie und damit temperaturstabilere Kassettengehäuse herzustellen.

Durch die Verwendung der höherwertigen reibungsarmen und verschleißfesten Kunststoffe Polyacetal, FEP-Fluor-Copolymere und Polyamid, die optimale Spritzgußbedingungen garantieren, können die Dicken der dünnen Teile der Vorderwand ohne negativen Einfluß auf das Gehäuse bis auf ein Minimum, das etwa bei 0,35 mm liegt, reduziert werden, so daß Raum für ein teilweise dickeres aber wirtschaftlich auch im Spritzgußverfahren herstellbares Verschlußteil aus derselben Gruppe von Kunststoffen ermöglicht wird. Damit wird der Einsatz eines Kunststoff-Verschlußteils in einem Kassettentyp, der obenerwähnte, durch IEC-Standard festgelegte Kassetten im Betrieb ersetzen soll, überhaupt erst möglich, bei erstaunlich guter Qualität und Maßhaltigkeit der Kassettengehäuse.

Es ist sehr vorteilhaft, wenn das Frontteil auf seiner dem Gehäuse zugekehrten Seite Bandreinigungselemente aufweist, besonders für Kassettentypen mit hoher Aufzeichnungsdichte. Praktisch können die Bandreinigungselemente jeweils z.B. aus einem Vliesmaterial-Streifen bestehen, so daß das Band im Betrieb auf dem Gerät vor und hinter dem A/W-Magnetkopf gereinigt wird.

Als erfindungsmäßig sind auch anzusehen das Frontteil mit den Bandreinigungselementen für Kassetten mit Verschlußteil sowie das aus einem der oben genannten Kunststoff-Materialien, insbesondere aus Polyoxymethylen, bestehende Verschlußteil für denselben Kassettentyp.

Das Verschlußteil besteht z.B. günstig aus einem Rückenteil mit größerer Dicke und zwei Seitenteilen mit geringerer Dicke.

Die Erfindung wird anhand von Ausführungsbeispielen in der Zeichnung dargestellt und beschrieben.

Darin zeigen:
- Fig. 1 a-c: die erfindungsgemäße Kassette mit Aufzeichnungsträger mit separatem Front- und Verschlußteil aus Kunststoff

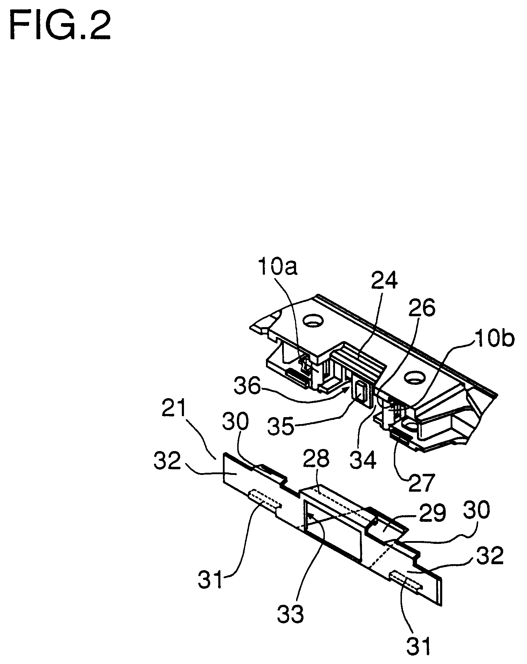

- Fig. 2: einen vergrößerten perspektivischen Ausschnitt auf die Front und das Frontteil der erfindungsgemäßen Kassette ohne Aufzeichnungsträgerband
- Fig. 3 a, b: die Kassette mit Aufzeichnungsträgerband und Verschlußteil gemäß dem Stand der Technik
- Fig. 4: einen Ausschnitt eines Querschnitts durch die Mitte (IV-IV) der herkömmlichen Kassette
- Fig. 5: einen Ausschnitt eines Querschnitts durch die Mitte der Kassettenfront mit erfindungsgemäßem Front- und Verschlußteil
- Fig. 6: eine Rückansicht des Frontteils mit Reinigungselementen.

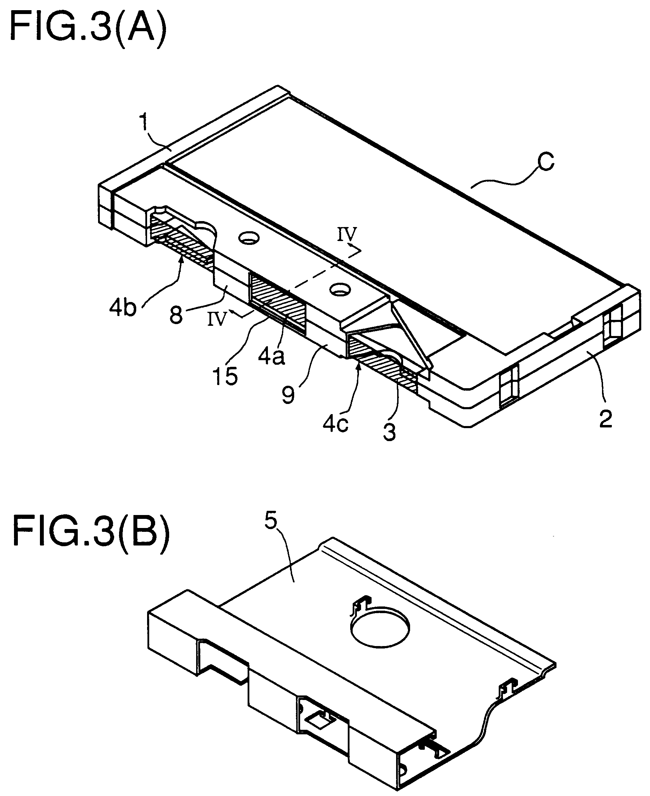

Eine Kassette C gemäß Stand der Technik (Figur 3) besteht aus einem thermoplastischen Gehäuseoberteil 1 und -unterteil 2, wobei das Gehäuse den bandförmigen Aufzeichnungsträger 3 umschließt und an den Frontöffnungen 4 a-c zum Eingriff mit nicht dargestellten Geräteelementen hält und freigibt.

Um den Aufzeichnungsträger 3 vor Staubanfall und Beschädigung zu schützen, sind die Öffnungen 4 a-c, 4 a Kopfeintrittsöffnung und 4 b, 4 c Frontöffnungen, und die nicht dargestellten Antriebsöffnungen im Gehäuseunterteil 2 durch ein Verschlußteil 5, das aus einem dünnen gestanzten und gebogenen, rostfreien Metallblech besteht, abgedeckt. Zur besseren Übersicht ist das Verschlußteil 5 in Fig. 3 b in seiner Position vor der montagemäßigen Verbindung mit der in Fig. 3 a dargestellten Kassette gezeigt.

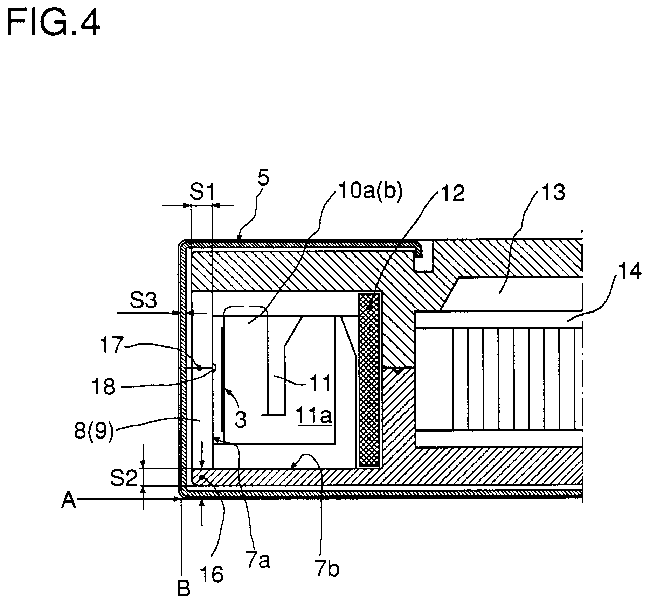

Fig. 4 zeigt das Verschlußteil 5 in einem Ausschnitt eines Querschnitts IV-IV durch die Kassette C in der Mitte der Kopfeintrittsöffnung 4 a in seiner auf das Kassettengehäuse montierten Lage. Dabei ist der bandförmige Aufzeichnungsträger 3 in seiner Mittenlage in Anlage an einem der links und rechts der Frontöffnung 4 a hinter den Frontwänden 8 und 9 und den Stegen 15 angeordneten Führungsstiften 10 a/b gezeigt. Des weiteren ist der Schlitz 11 zur Aufnahme von hier nicht dargestellten Bandandruckelementen, ein dahinter angeordnetes Abschirmblech 12 und ein Freiraum 13 für die wickelförmigen Vorratsrollen 14 für den Aufzeichnungsträger 3 gezeigt. Das Aufnahmeteil 11 a für die Bandandruckelemente ist an der Bodenwandfläche 7 b angebracht.

Da auf Geräten für die bekannte Kassette auch Kompakt Kassetten gemäß IEC-Standard (s.o.) abgespielt werden sollen, sind z.B. die Lage der Innenwände 7 b zur Grundebene A mit max. 1 mm und der Innenwand 7 a zur Frontwand B mit max. 1,2 mm limitiert. Die Frontwände 8 und 9 können deshalb maximal S1 = 0,75 mm und die Bodenwand 16 im Bereich der Kopfeintrittsöffnung 4 a maximal S2 = 0,6 mm dick sein. Für die zulässige Dicke des Verschlußteils 5 bleiben dabei nur ca. S3 = 0,2 mm übrig, da das Verschlußteil 5 einerseits auf dem Kassettengehäuse gleiten und daher ein Spiel haben muß, und andererseits nicht über die Außenflächen der Kassette C überstehen darf. Diese Maße sind für ein im Spritzguß gefertigtes Kassettengehäuse sehr ungünstig, da sowohl das Material als auch die Spritzgußparameter für das ganze Gehäuse mit sonst günstigeren Dicken und Querschnitten hauptsächlich auf diese dünnen Teilwände abgestimmt werden muß. Die daraus resultierenden Nachteile sind oben diskutiert worden.

Ein weiterer Nachteil der bekannten Kassette besteht darin, daß es beim Verschweißen des Gehäuseoberteils mit dem -unterteil an den Stoßstellen 17 zwischen den Frontwänden 8 und/oder 9 innen wie außen leicht zu überstehenden Schweißwülsten 18 kommen kann, die entweder den Aufzeichnungsträger 3 verkratzen oder die Bewegung des Verschlußteils 5 behindern können.

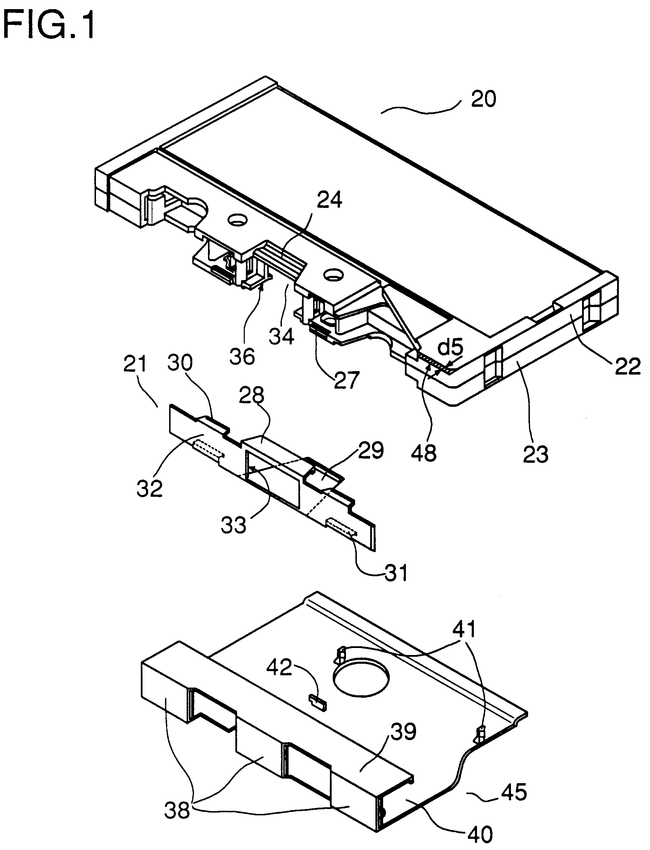

Figur 1 a zeigt die erfindungsgemäße Kassette 20 mit einem davon getrennten Frontteil 21 und einem formmäßig unveränderten Verschlußteil 45, jedoch jeweils aus leicht spritzbarem Kunststoff-Material.

Gegenüber der Kassette C in Figur 3 sind die dünnen Vorderwände 8, 9 und die Stege 15 fortgelassen worden, wodurch in diesem Bereich Raum für das Frontteil 21 geschaffen ist. Die Spritzbedingungen für die Gehäusehälften, Boden- und Deckelteile 22 und 23, sind deshalb ohne Rücksicht auf die Vorderwände der Kassette 20 optimierbar. Beide Teile Frontteil 21 und Verschlußteil 45 sind aus unten erwähnten Kunststoffen im Spritzguß hergestellt.

Die Boden- und Deckelteile 22 und 23 weisen Rastnuten 24 und 26 am Deckelteil 23 sowie Rastnuten 25 und 27 am Bodenteil 22 auf, wobei die Rastnuten 24 und 25 außen liegen und die Rastnuten 26 und 27 innen liegen. Der Querschnitt der Rastnuten 24 - 27 ist beliebig, es muß nur ein geeignetes Verrasten oder Verhaken zwischen den Rastnuten 24 - 27 und den noch zu beschreibenden steg- oder hakenartigen Vorsprüngen 28 bis 31 montagemäßig und danach gewährleistet sein.

Die Vorsprünge 28 und 29 sind dabei in der Mitte des Frontteils 21 vorgesehen und die Vorsprünge 30 und 31 sind rechts und links der Mitte angeordnet.

Das Frontteil 21 selbst besteht aus einer langgestreckten Wand 32 mit einer rechteckigen Kopfeintrittsöffnung 33 in der Mitte.

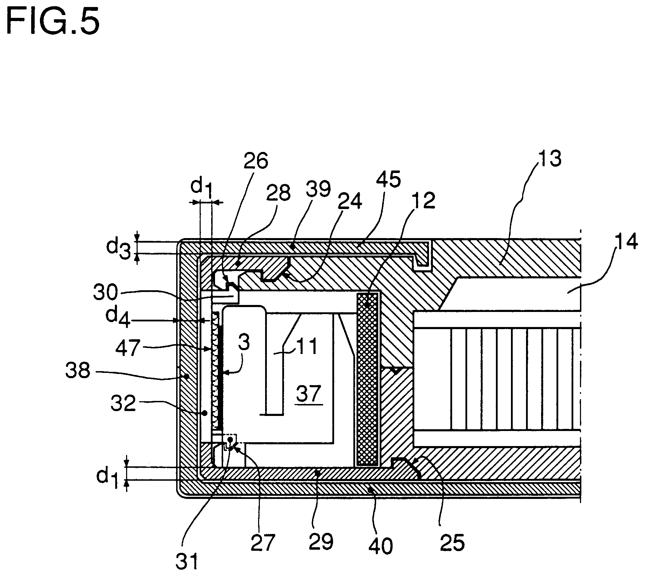

Die Vorsprünge 28 - 31 sind etwa rechtwinklig an den Ober- und Unterkanten der Wand 32, die etwa die Höhe der Frontöffnung 34 der Kassette 20 besitzt, angebracht. Dabei hat der obere mittlere Vorsprung 28 einen kurzen Abstand von der Wand 32 mit nach unten gerichtetem Rast- oder Hakenfortsatz. Der untere mittlere Vorsprung 29 ist länger ausgebildet, reicht im Kassettengehäuse unter die von oben in die Gehäuseöffnung 34 ragende Andruckeinrichtung 35. Der Vorsprung 29 ist dabei als Ergänzungsteil der Bodenwand, genauer der Aussparung 36, ausgebildet. Die Lage der Rastnuten 24 - 27 ist am besten in Figur 5 erkennbar. Die Rastnut 25 liegt dabei hinter dem Abschirmelement 12 und der Rast- oder Hakenfortsatz greift da hinein. Die Nut 24 ist formmäßig gleich ausgebildet, nur liegt die Nut 24 etwas oberhalb der Andruckeinrichtung, von der hier nur der am vorragenden Ende des Deckelteils 23 angebrachte Führungsblock 37 dargestellt ist. Die Vorsprünge 30 und 31 greifen in die ihnen zugeordneten inneren Rast- oder Hakennuten 26 bzw. 27 ein, so daß eine sichere, zur Mitte symmetrische Befestigung des Frontteils 21 sichergestellt ist. In allen Fällen sind es die flachen Wände der Deckel- oder Bodenteile 23 bzw. 22, mit denen die Vorsprünge 28 - 31 in Eingriff kommen. Wenn das Frontteil 21 in seiner Sollage befestigt ist, sind dieselben Frontöffnungen 4 a - 4 c vorhanden wie bei der Kassette C in Figur 3.

Wird das Frontteil 21, das eine Grundfläche von etwa 8 · 41 mm² besitzt und aus einem leicht fließenden Polyacetal, vorzugsweise Polyoxymethylen, einem FEP Fluorkunststoff oder Polyamid hergestellt, so lassen sich die Wand 32 sowie der Ergänzungsvorsprung 29 in einer Dicke d 1 von etwa 0,35 bis etwa 0,5 mm, vorzugsweise d 1 von etwa 0,4 mm herstellen. Die Summe der Dicken des Verschlußteils 45 und des Frontteils 21 beträgt damit etwa 1 mm. Für das Verschlußteil 45, das vorteilhaft aus demselben Material hergestellt sein kann, aber nicht zwingend muß, bleibt gerade noch soviel Raum, um die im Spritzguß sicher realisierbaren Wandstärken d 4 von etwa 0,6 mm am Rückenteil 38 des Verschlußteils 45, und d 3 von etwa 0,45 mm an den Seitenteilen 39 und 40 des Verschlußteils 45 auszulegen. Die Dicke des Verschlußteils 45 beträgt vorteilhaft von etwa 0,4 (d 3) bis etwa 0,65 mm (d 4). Die Dicke d 4 ist auch aus Gründen der in diesem Frontbereich größeren Festigkeit größer als d 3. Die Kernarretierungen 41 und die Federnase 42 des Verschlußteils 45 sind dabei in einem Arbeitsgang bei der Herstellung mit ausgebildet. Praktisch wurden Frontteil 21 und verschlußteil 45 aus Polyoxymethylen (POM), einem Acetal, hergestellt. POM ist ein temperaturbeständiges, verschleißfestes und leicht gleitendes Kunststoff-Material, das auch in den verschiedenen Farben einfärbbar ist.

Das erfindungsgemäße, aus Kunststoff bestehende und mit verschiedenen Wandstärken ausgebildete Verschlußteil bedarf keiner Nachbearbeitung und/oder Oberflächenbehandlung und kann als farbiges Design-Element eingesetzt werden. Dasselbe gilt natürlich auch für das separate Frontteil.

Das erfindungsgemäße Kassettengehäuse kann ohne Funktionsminderung aus Standard-Polystyrol oder auch Polypropylen hergestellt werden. Bei Standard-Polystyrol beträgt die Ersparnis 30 % gegenüber ABS-Polycarbonat.

Gegenüber der bekannten auf dem Markt befindlichen DCC Kassette ist durch das erfindungsgemäße Verschlußteil eine ca. 50 %ige und durch das Frontteil eine nochmalige 15 %ige Ersparnis erzielbar.

Da die größte Dicke d 5 der Vorderwand 48 (Fig. 1) etwa d 5 = 1,22 mm beträgt, ergeben sich für die Dicke des Frontteils 21 die Grenz-Faktoren 2,2 bis 3,5. Dabei wurde der oben angegebene Dickenbereich für das Frontteil 21 zugrundegelegt. Dieselben Grenzfaktoren gelten auch für die Seitenteile 39 und 40 des Verschlußteils 45, während für das Rückenteil 38 des Verschlußteils 45 der Faktor von etwa 2 gilt.

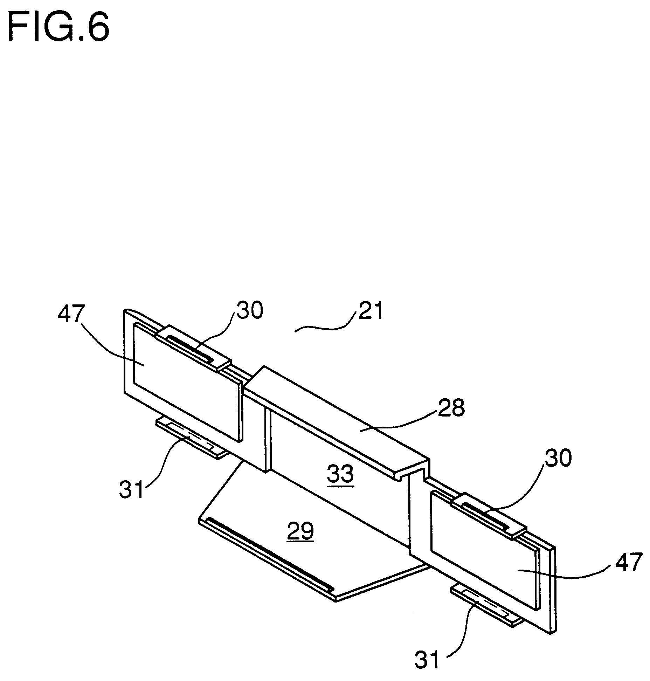

Figur 5 zeigt an der Innenseite der Wand 32 des Frontteils 21 ein Band-Reinigungselement 47, das direkt dem Band 3 gegenüber angeordnet ist und ständig mit demselben in Kontakt stehen soll über dessen ganze Bandbreite. Das Reinigungselement oder besser die Reinigungselemente 47 (Figur 6), die günstig beidseitig der Öffnung 33 an der Innenseite des Frontteils 21 angeordnet sind, besteht zweckmäßig aus einem Vliesmaterial, das sich durch hohe Abriebfestigkeit und große Flauschigkeit und weitgehende Lösemittelfreiheit auszeichnet.

Die aus den Gewirk- oder Gewebe-Teilen und evtl. einem Aufrauhungsteil bestehende Schichtauflage wird als Gewirk in einem Wirkvorgang oder als Gewebe in einem Webvorgang hergestellt. Anschließend wird die Oberfläche z.B. mit Kurznadel-Bürsten so aufgerauht, daß die Wirk- oder Webverbindungen teilweise zerstört oder aufgebrochen werden und Faserenden teilweise herausstehen. Durch Abscheren der Faserenden wird eine flauschige, wildlederartige Oberfläche erhalten, die als Berührungsfläche für Bandrückseite und Kopfspiegel sehr geeignet ist. Die Dicken der Gewirk- oder Gewebe-Teile betragen dabei etwa 0,5 mm bzw. etwa 0,15 mm bis etwa 0,3 mm, vorzugsweise etwa 0,25 mm, so daß eine Gesamtdicke der Schichtauflage etwa 0,8 mm betragen kann. Dabei wurde eine mittlere Faserstärke von etwa 10 µm bei einem Fasergewicht von 1,5 g pro 10000 m benutzt. Generell ist eine mittlere Faserstärke von etwa 10 bis etwa 25 µm bei Fasergewichten von ca. 1,5 bis etwa 5 g/10 000 m benutzbar.

Das Flächengewicht des Gewirkes/Gewebes betrug dabei ca. 160 bis ca. 180 g/m² (Faserstärke etwa 10 µm).

Ein Vlies als Schichtauflage besteht aus Fasern von einer mittleren Länge von ca. 50 mm und einer Faserstärke von etwa 5 bis etwa 15 µm bei einem Flächengewicht von etwa 85 g/m² bis etwa 110 g/m² oder bis etwa 25 µm bei größeren Flächengewichten.

Das Flächengewicht der Faserschichten kann jedoch prinzipiell im Bereich zwischen etwa 30 bis etwa 300 g/m² liegen, um im technischen Sinne und mit den angegebenen Vorteilen für die vorliegende Erfindung verwendbar zu sein.

Die Dicke des Vlieses beträgt etwa 0,15 bis etwa 0,6 mm, vorzugsweise 0,25 mm, der letzte Wert gilt besonders für eine Vliesschicht im aufgeklebten Zustand. Die quasi-statisch gemessenen Reibungs-Koeffizienten des Gewirkes/Gewebes und des Vlieses gegen die Bandrückseite betrugen etwa 0,35 bzw. 0,38, gemessen über einer mit dem Material überzogene Stahltrommel mit 10 cm Durchmesser und einer 180°-Umschlingung bei Belastung mit 20 g.

Die Dicke des Vlieses sollte, da keine als Feder dienende Filzunterlage zur Abstützung und Vergleichmäßigung der Andruckkräfte dient, größer sein als die wirksamen Gewirk-/Gewebe- und Vliesschichten, deren Dicken im angeklebten Zustand im Bereich von ca. 0,15 bis ca. 0,3 mm liegen können.

Die Dicke des Vlieses sollte im aufgeklebten Zustand wenigstens 0,5 mm betragen, kann jedoch ohne weiteres auch größer gewählt werden.

Eine Verbindung über thermisches Schweißen ist ebenfalls denkbar. Die Schweißpunkte sollten dabei jedoch sehr klein gewählt und nach dem Verschweißen eine etwa gleichmäßige Dicke des Vlieses sichergestellt sein. Auch chemische Faserverbindungen sind bekannt.

Bindemittel, gleich welcher Art, sollten zumindest im Bereich der das Band berührenden Schichtauflage nicht vorhanden sein, da diese äußerst Bandlauf- und Kopffunktion-störende oder -schädigende Einflüsse bewirken können.

Die Gewirk- oder Gewebe-Schichtauflagen sind auf die Filz-Unterlage mit herkömmlichen Klebemitteln, z.B. Polyurethan-, Acrylatkleber oder einem Mischkleber aus Polyurethan-Butadien-Acryl-Nitril, aufklebbar. Die Vlies-Schichtauflage kann z.B. mittels doppelseitigen Klebebandes oder in anderer geeigneter Weise aufgeklebt werden.

Die Fasern der Schichtauflagen bestehen z.B. aus Polyamidfasern bei Gewirken und Geweben und Polyester/Polyamid-Mikrofasern bei Vliesen. Selbstverständlich können alle Schichtauflagen auch aus allen anderen geeigneten Faser bestehen, wie z.B. Polypropylen, Polyacrylnitril, regenerierter Zellulose, Wolle oder Zellulose-Triacetat.

Verwendbar ist die Erfindung generell für alle Kassetten mit Verschlußteil, z.B. einem Schieber, wobei entweder an der Kassetten-Vorderwand oder direkt an daran angrenzenden Bereichen dünne oder sehr dünne Wandstärken erforderlich sind. Ein besonderer Vorteil liegt, wie oben beispielhaft beschrieben, natürlich dann vor, wenn ein erstes Kassettensystem für die zusätzliche Verwendung der Kassetten eines zweiten Kassettensystems nutzbar gemacht werden soll und eine sehr wirtschaftliche Herstellung der Kassettenteile angestrebt ist.

Eine Kassette gemäß der Erfindung besteht aus im wesentlichen flachen Gehäuseteilen und Front-, Rück- und Seitenwänden sowie einem Verschlußorgan für die Öffnungen der Frontseite, wobei die Frontseite teilweise mittels eines am Gehäuse befestigbaren Frontteils vervollständigbar ist. Frontteil und Verschlußorgan sind dabei mit ihnen zugeordneten Dickenmaßen aus geeignetem, spritzbarem Kunststoff hergestellt. Das Frontteil ist mit Reinigungselementen versehen.

Verwendbar ist die Kassette immer dann, wenn dünne Wanddicken erforderlich sind und ein Verschlußorgan vorhanden ist.

## Patentansprüche

1. Kassette, insbesondere Magnetbandkassette, mit einem Gehäuse aus Boden- und Deckelteilen (22, 23) und Rückwand, Vorderwand (48) und Seitenwänden, wobei die Vorderwand wenigstens eine mit einem Verschlußteil (45) verschließbare Kopfeintrittsöffnung (33) aufweist, dadurch gekennzeichnet, daß ein die Vorderwand (48) im Bereich der Kopfeintrittsöffnung (33) bildendes, an sich bekanntes, separates, am Gehäuse (22, 23) befestigbares Frontteil (21) vorgesehen ist und daß Verschlußteil (45) und Frontteil (21) aus Kunststoff-Material bestehen.

2. Kassette nach Anspruch 1, dadurch gekennzeichnet, daß die Dicke des Frontteils (21) im Vergleich zur größten Dicke (d 5) der Vorderwand (48) um ein Mehrfaches kleiner ist.

3. Kassette nach Anspruch 2, dadurch gekennzeichnet, daß der Mehrfach-Faktor zwischen 2,2 und 3,5 liegt.

4. Kassette nach Anspruch 1 und einem oder mehreren der Ansprüche 2 und 3, dadurch gekennzeichnet, daß das Frontteil (21) einen Ergänzungsteil (29) für das Bodenteil (22) aufweist.

5. Kassette nach einem der Ansprüche 1 - 4, dadurch gekennzeichnet, daß die Summe der größten Dicken (d 1, d 4) des Verschlußteils (45) und des Frontteils (21) etwa 1 mm beträgt.

6. Kassette nach einem der Ansprüche 1 - 5, wobei hinter der Kopfeintrittsöffnung (33) eine Bandandruck-Einrichtung (35) angeordnet ist, dadurch gekennzeichnet, daß das Ergänzungsteil (29) des Frontteils (21) die Bandandruck-Einrichtung (35) untergreift.

7. Kassette nach Anspruch 1 und einem der Ansprüche 2 oder 6, dadurch gekennzeichnet, daß das Frontteil (21) Befestigungselemente (28 - 31) aufweist, die zumindest überwiegend mit den Wänden der Boden- und Deckelteile (22, 23) der Kassette (20) zusammenwirken.

8. Kassette nach Anspruch 1 und einem oder mehreren der Ansprüche 2 bis 7, dadurch gekennzeichnet, daß die Frontteil-Befestigungselemente (28 - 31) aus Vorsprüngen bestehen und die Wände der Boden- und Deckelteile (22, 23) entsprechend geformte Befestigungsnuten (24 - 27) aufweisen.

9. Kassette nach Anspruch 1 und einem oder mehreren der Ansprüche 2 bis 8, dadurch gekennzeichnet, daß Verschlußteil (45) und Frontteil (21) aus einem Kunststoff, ausgewählt aus der Gruppe Polyacetal, FEP Fluorkunststoff oder Polyamid, bestehen.

10. Kassette nach Anspruch 1 und einem oder mehreren der Ansprüche 2 bis 9, dadurch gekennzeichnet, daß das Verschlußteil eine Dicke zwischen etwa 0,4 bis etwa 0,65 mm und das Frontteil eine Dicke zwischen etwa 0,35 bis etwa 0,5 mm besitzt und Verschlußteil (45) und Frontteil (21) aus Polyoxymethylen bestehen.

11. Kassette nach Anspruch 1 und 9 und einem oder mehreren der Ansprüche 2 bis 8 und 10, dadurch gekennzeichnet, daß das Gehäuse (22, 23) aus Polystyrol oder Polypropylen besteht.

12. Kassette nach Anspruch 1 und einem oder mehreren der Ansprüche 2 bis 11, dadurch gekennzeichnet, daß das Frontteil (21) auf seiner dem Gehäuse zugekehrten Seite Band-Reinigungselemente (47) aufweist.

13. Kassette nach Anspruch 12, dadurch gekennzeichnet, daß die Bandreinigungselemente (37) aus Vliesstreifen bestehen.

14. Frontteil für eine Kassette nach Anspruch 1 und 10, gekennzeichnet durch eine Dicke (d 1) von etwa 0,35 bis etwa 0,5 mm.

15. Frontteil nach Anspruch 14, dadurch gekennzeichnet, daß es aus Polyoxymethylen besteht.

16. Frontteil nach Anspruch 14 oder 15, dadurch gekennzeichnet, daß es wenigstens ein Band-Reinigungselement (47), insbesondere aus Gewirk-, Gewebe- oder Vliesmaterial, aufweist.

17. Verschlußteil für eine Kassette nach Anspruch 1 und 10, gekennzeichnet durch eine Dicke (d 3, d 4) von etwa 0,4 mm bis etwa 0,65 mm.

18. Verschlußteil nach Anspruch 17, dadurch gekennzeichnet, daß es aus Polyoxymethylen besteht.

19. Verschlußteil nach Anspruch 17 oder 18, dadurch gekennzeichnet, daß dasselbe im Querschnitt gesehen aus einem Rückenteil (38) mit größerer Dicke (d 4) und zwei Seitenteilen (39, 40) mit geringerer Dicke (d 3) besteht.
